# EUROPEAN PATENT SPECIFICATION

(11) **EP 3 002 855 B1**
(45) Date of publication and mention of the grant of the patent: **13.09.2017**
(21) Application number: 15187917.8
(22) Date of filing: 01.10.2015
(51) Int. Cl.: H02K 3/50

(54) **MOTOR**
MOTOR
MOTEUR

(30) Priority: 02.10.2014 JP 2014204257
(43) Date of publication of application: 06.04.2016
(73) Proprietor: Nidec Servo Corporation, Kiryu-shi, Gunma 376-0011 (JP)
(72) Inventor: SHIOHATA, Teruo, Kiryu-shi, Gunma 376-0011 (JP)
(74) Representative: Zimmermann, Tankred Klaus

(56) References cited:
- US-A1- 2007 247 010
- US-A1- 2012 299 451

## Description

### Field of the Invention

The present invention relates to a motor.

### Description of the Related Art

An outer-rotor-type motor in which a lead wire extending from a stator unit is soldered and connected to a circuit substrate is known. For example, Japanese Patent Application Publication No. 2007-166851 discloses a structure in which a lead wire is disposed at the rear side of a circuit substrate and soldering is performed at the rear side of the circuit substrate.

There are available a double-side mounting type circuit substrate having patterns on the opposite surfaces thereof and a single-side mounting type circuit substrate having a pattern on one surface thereof. In the case where the single-side mounting type circuit substrate is used as a circuit substrate of a motor, a lead wire needs to be soldered on the surface of the circuit substrate on which a stator unit is mounted. In this case, there is a possibility that a surplus portion of a soldered lead wire makes contact with wiring lines or surrounding components. Thus, it is desirable to cut away a surplus portion of a lead wire after the lead wire is soldered.

In the lead wire cutting work, careful attention needs to be paid so as not to damage a circuit substrate. The lead wire cutting work requires a lot of man-hours. Furthermore, components having a relatively large size such as a stator unit of a motor and the like are disposed at the side of a circuit substrate at which a stator unit is mounted. For that reason, it is difficult to automate a lead wire cutting process.

US 2007/0247010 A1 describes a motor including a circuit board having a bottom facing surface and a plurality of connecting land portions provided thereon. The circuit board includes a through hole for allowing a wire to extend therethrough. An attachment board makes contact with the bottom facing surface of the circuit board. The attachment board includes an opening portion penetrating the attachment board. The wire is wound around a stator core arranged above or equal to the circuit board in an axial direction so as to form a coil. The wire extending from the stator core is soldered to the connecting land portion. The opening portion of the attachment board is arranged at a position such that it makes no direct contact with the wire.

US 2012/0299451 A1 describes a stator assembly for a motor and a motor including the same. The stator assembly includes a base supporting a core having a coil wound therearound, the coil generating rotational driving force; a printed circuit board disposed between the core and the base and electrically connected to a lead wire of the coil; and a penetration part formed to penetrate through the base to thereby allow the printed circuit board to pass therethrough.

### Summary of the Invention

It is an object of the present invention to provide a motor capable of not damaging a substrate and patterns on the surface when cutting away a surplus lead wire and capable of preventing a cut edge of a lead wire from making contact with components mounted on a substrate or surrounding components such as a rotor and the like.

This object is achieved by a motor as defined in claim 1.

According to the present invention, an escape portion for allowing blade edges of a cutting tool to escape is provided along a lead wire fixing portion. Thus, a lead wire can be cut in a state in which the tip of the cutting tool is retreated into the escape portion. As a result, a circuit substrate or a wiring pattern on the circuit substrate is not damaged when cutting the lead wire. Furthermore, a cut end of the lead wire is positioned above the escape portion provided along the lead wire fixing portion. As a consequence, it is possible to obtain a motor in which the cut end of the lead wire does not make contact with the components mounted on the circuit substrate or the surrounding components such as a rotor and the like.

The above and other elements, features, steps, characteristics and advantages of the present invention will become more apparent from the following detailed description of the preferred embodiments made with reference to the attached drawings.

### Brief Description of the Drawings

Fig. 1 is a perspective view illustrating the external configuration of a motor according to one preferred embodiment.
Fig. 2 is a sectional view of the motor according to one preferred embodiment.
Fig. 3 is an exploded perspective view of the motor according to one preferred embodiment.
Fig. 4 is a perspective view of the motor according to one preferred embodiment, with a rotary unit and bearings removed.
Fig. 5 is a plan view of a circuit substrate employed in the motor according to one preferred embodiment.
Fig. 6 is an enlarged sectional view of a circuit substrate including lead wire fixing portions and escape portions according to one preferred embodiment.
Fig. 7 is a process diagram illustrating a lead wire cutting process according to one preferred embodiment.
Fig. 8 is a view illustrating an operation of a cutting tool in the lead wire cutting process illustrated in Fig. 7.
Fig. 9 is a process diagram illustrating a lead wire cutting process which differs from the lead wire cutting process illustrated in Fig. 7.
Fig. 10 is a process diagram illustrating a lead wire cutting process which differs from the lead wire cutting process illustrated in Fig. 7.
Fig. 11 is a view illustrating modification 1 of the circuit substrate employed in the motor according to one preferred embodiment and an enlarged sectional view of the circuit substrate including lead wire fixing portions and escape portions
Fig. 12 is a view illustrating modification 2 of the circuit substrate employed in the motor according to one preferred embodiment and a plan view of the circuit substrate.

### Detailed Description of the Preferred Embodiments

A preferred embodiment will now be described with reference to the accompanying drawings.

There may be a case where the drawings used in the following descriptions illustrate characterizing parts on an enlarged scale for the sake of convenience in order to emphasize the characterizing parts. Dimensional ratios of individual components are not necessarily identical with actual ones. For the same purpose, there may be a case where non-characterizing parts are omitted. In each of the drawings, there is shown an X-Y-Z coordinate system. In the following descriptions, if necessary, directions will be described based on the coordinate system.

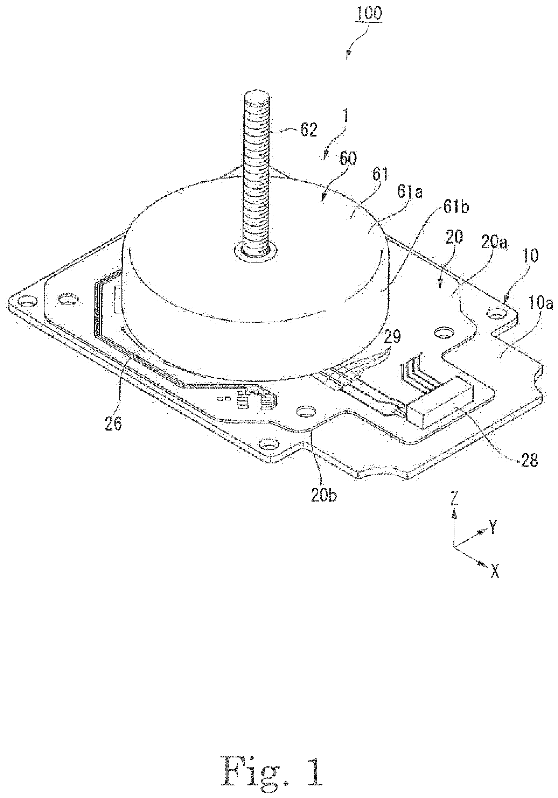

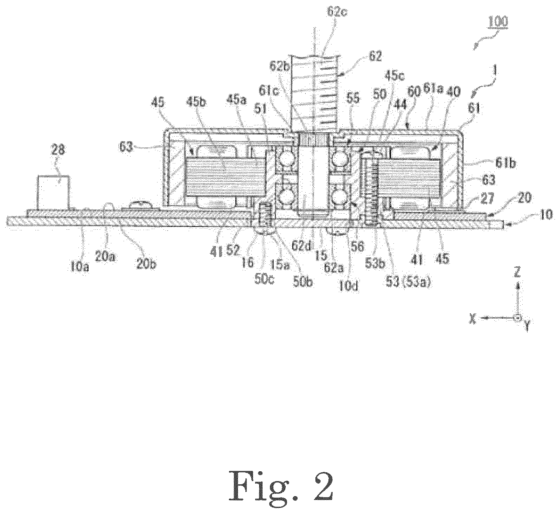

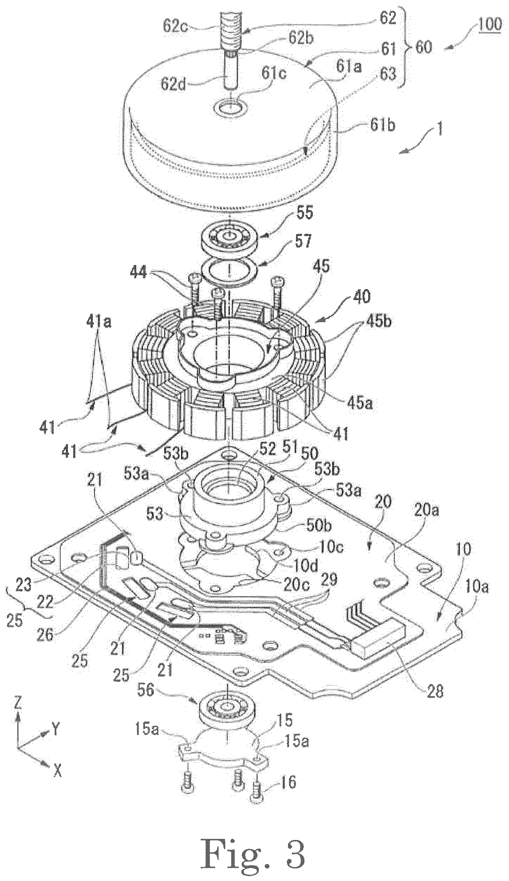

Fig. 1 is a perspective view illustrating the external configuration of a motor 100 according to one preferred embodiment. Fig. 2 is a sectional view of the motor 100. Fig. 3 is an exploded perspective view of the motor 100. The motor 100 according to the present embodiment may be a three-phase motor and may be an outer-rotor-type motor including twelve magnetic teeth around which coils are wound. However, the motor of the present invention is not limited to the three-phase motor. Furthermore, the number of the magnetic teeth is not limited to twelve.

When describing respective parts in the subject specification, the +Z direction in the drawings will be defined as an upward direction and the -Z direction in the drawings will be defined as a downward direction. However, the motor 100 is not necessarily used in a state in which the +Z direction is oriented upward. For example, the motor 100 may be used in which the +Z direction is oriented sideways or downward.

As illustrated in Fig. 1, the motor 100 preferably includes a fixing plate 10, a circuit substrate 20 mounted on an upper surface 10a of the fixing plate 10 and a drive part 1 positioned on a major surface 20a of the circuit substrate 20. As illustrated in Figs. 2 and 3, the drive part 1 preferably includes a stator unit 40, a rotary unit 60 rotatable with respect to the stator unit 40, a bearing housing 50, a bearing 55 and a bearing 56. The rotary unit 60 preferably includes a spindle 62, a rotor holder 61 and a magnet 63.

### <stator Unit>

As illustrated in Figs. 2 and 3, the stator unit 40 is mounted on the upper surface 10a of the fixing plate 10. The stator unit 40 preferably includes a stator core 45, which includes an annular core back 45a and magnetic teeth 45b protruding in a radial pattern from the core back 45a, and lead wires 41 wound around the magnetic teeth 45b.

Twelve magnetic teeth 45b protrude radially outward in a radial pattern from the core back 45a. The lead wires 41 are wound around the respective magnetic teeth 45b with insulation materials interposed therebetween.

The bearing housing 50 is fitted to the inner circumferential surface of the annular core back 45a. In the core back 45a, there are provided three holes 45c into which fixing screws 44 for fixing the stator unit 40 to the fixing plate 10 are inserted.

The lead wires 41 are wound around the twelve magnetic teeth 45b to constitute twelve coils. Three lead wires 41 extend from the stator unit 40. The three lead wires 41 extend from the coils that constitute a U-phase, a V-phase and a W-phase, respectively.

The three lead wires 41 are connected to the circuit substrate 20. The direction and on/off state of an electric current flowing through the lead wires 41 are switched by a control signal of an external device which will be described later. By switching the electric current flowing through the lead wires 41, the motor 100 generates a mutually-pulling force or a mutually-repulsing force between the respective magnetic teeth 45b and the magnet 63 of the rotary unit 60, thereby rotating the rotary unit 60.

### <Bearing Housing>

As illustrated in Fig. 2, the bearing housing 50 is disposed inward of the annular core back 45a of the stator unit 40. The bearing housing 50 preferably includes a cylinder portion 51 having a cylindrical shape, an annular protrusion portion 52 provided on the inner circumferential surface of the cylinder portion 51 and a flange portion 53 provided on the outer circumferential surface of the cylinder portion 51.

The annular protrusion portion 52 protrudes inward so that the inner diameter of the cylinder portion 51 becomes small. The annular protrusion portion 52 is positioned at a substantially vertical center on the inner circumferential surface of the cylinder portion 51. On the inner circumferential surface of the cylinder portion 51, the bearing 55 and the bearing 56 are provided above and below the annular protrusion portion 52.

The flange portion 53 protrudes outward so that the outer diameter of the cylinder portion 51 become large. The flange portion 53 is positioned at the lower end of the outer circumferential surface of the cylinder portion 51. As illustrated in Fig. 3, the flange portion 53 preferably includes three projections 53a. The three projections 53a are disposed in rotation symmetry with respect to the center axis of the cylinder portion 51. Holes 53b are provided in the projections 53a. Fixing screws 44 are inserted into the three holes 53b provided in the projections 53a of the bearing housing 50 and the three holes 45c provided in the core back 45a of the stator unit 40. The fixing screws 44 are fitted to screw holes 10c provided in the fixing plate 10. Thus, the stator unit 40 and the bearing housing 50 are fixed to the fixing plate 10.

As illustrated in Fig. 2, screw holes 50c are provided on a lower surface 50b of the bearing housing 50. Fixing screws 16 are fitted to the screw holes 50c through holes 15a of a backing plate 15. Thus, the backing plate 15 is fixed to the lower surface 50b of the bearing housing 50. The backing plate 15 is disposed in a spaced-apart relationship with the lower end of the spindle 62. The backing plate 15 supports the spindle 62 in the case where the spindle 62 is moved downward by a vertical downward external force applied to the spindle 62.

### <Bearing>

As illustrated in Fig. 2, the bearing 55 and the bearing 56 are ball bearings, the inner races of which are fitted to the spindle 62 and the outer races of which are fitted to the bearing housing 50. The bearing 55 and the bearing 56 rotatably support the spindle 62 with respect to the bearing housing 50.

### <Rotary Unit>

As illustrated in Figs. 2 and 3, the rotary unit 60 preferably includes the spindle 62, the rotor holder 61 and the magnet 63. The rotary unit 60 relatively rotates with respect to the stator unit 40.

The spindle 62 preferably includes a male thread portion 62c that constitutes a portion of a ball screw (not illustrated), and a fitting portion 62d fitted to the bearing 55 and the bearing 56. The shaft diameter of the fitting portion 62d is smaller than the shaft diameter of the male thread portion 62c. The fitting portion 62d is provided in a lower region of the total length of the spindle 62.

A nut (not illustrated) incapable of making rotation and capable of moving in an up-down direction is mounted to the male thread portion 62c. The nut and the spindle 62 constitute a ball screw. Along with the rotation of the spindle 62, the nut is moved in the up-down direction.

A knurling surface 62b is provided in the region of the fitting portion 62d existing close to the male thread portion 62c. The rotor holder 61 is fitted to the knurling surface 62b.

The rotor holder 61 has a cup shape. The rotor holder 61 preferably includes a disc-shaped top plate portion 61a connected to the spindle 62 at the center thereof and a cylinder portion 61b provided so as to extend downward from the outer periphery of the top plate portion 61a.

As illustrated in Fig. 2, a burring portion 61c is provided at the center of the rotor holder 61. The fitting portion 62d of the spindle 62 is inserted inward of the burring portion 61c. Specifically, the knurling surface 62b of the fitting portion 62d is press-fitted to the inner circumferential surface of the burring portion 61c. Thus, the rotor holder 61 and the spindle 62 are fixed and connected to each other.

The magnet 63 has a cylindrical shape. The magnet 63 is fixed to the inner circumferential surface of the cylinder portion 61b of the rotor holder 61. The magnet 63 is alternately magnetized into eight poles along the inner circumferential surface of the cylinder portion 61b of the rotor holder 61.

### <Fixing Plate>

The fixing plate 10 is a metal-made flat plate. The circuit substrate 20 having a rear surface 20b facing toward an upper surface 10a of the fixing plate 10 is fixed to the upper surface 10a of the fixing plate 10. The upper surface 10a of the fixing plate 10 and the rear surface 20b of the circuit substrate 20 are fixed by, for example, screws. The circuit substrate 20 is mounted to the side of the upper surface 10a of the fixing plate 10.

As illustrated in Fig. 3, a hole 10d for mounting the backing plate 15 is provided substantially at the center of the fixing plate 10. Screw holes 10c for fixing the stator unit 40 and the bearing housing 50 are provided around the hole 10d.

### <Circuit Substrate>

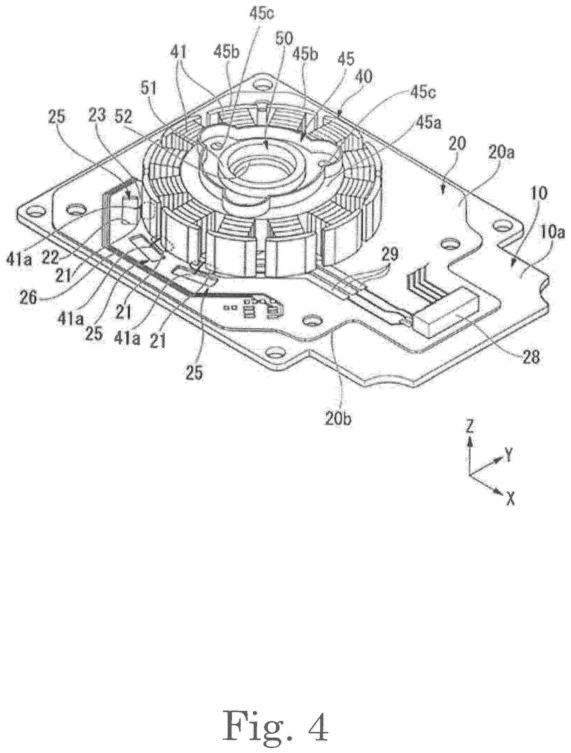

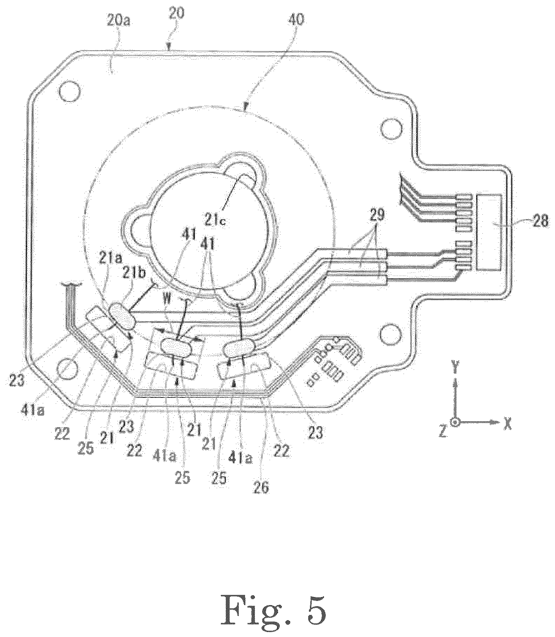

Fig. 4 is a perspective view of the motor 100 with the rotary unit 60 and the bearings 55 and 56 removed. Fig. 5 is a plan view of the circuit substrate 20, in which view the stator unit 40 is indicated by a double-dot chain line. The lead wires 41 extending from the stator unit 40 are also shown in Fig. 5.

The circuit substrate 20 preferably includes a major surface 20a as an upper surface and the rear surface 20b as a lower surface opposite to the major surface 20a. The circuit substrate 20 is mounted to the upper surface 10a of the fixing plate 10 with the major surface 20a thereof facing upward. The circuit substrate 20 is a single-side mounting type circuit substrate having a mounting region only on the major surface 20a. The rear surface 20b of the circuit substrate 20 is brought into close contact with the fixing plate 10 and is fixed to the fixing plate 10.

A hole 20c is provided substantially at the center of the circuit substrate 20. The hole 10d and the screw holes 10C of the fixing plate 10 are exposed from the hole 20c. The plan-view shape of the hole 20c is substantially identical with the shape of the lower surface 50d of the bearing housing 50. The bearing housing 50 is disposed in the hole 20c.

Three current supply wiring lines 29 for supplying an electric current to the lead wires 41 of the stator unit 40 are provided on the major surface 20a of the circuit substrate 20. A Hall IC 27 (see Fig. 2) for detecting magnetic poles is mounted on the major surface 20a of the circuit substrate 20 immediately below the magnet 63 of the rotary unit 60. In addition, a connector 28 is mounted to the circuit substrate 20. An external device connected to the connector 28 supplies an electric current and a control signal to the motor 100.

As illustrated in Fig. 5, lead wire fixing portions 21 for fixing the lead wires 41 extending from the stator unit 40 are provided on the major surface 20a of the circuit substrate 20. Three lead wire fixing portions 21 are provided on the major surface 20a of the circuit substrate 20 in a corresponding relationship with the three lead wires 41. The three lead wire fixing portions 21 are disposed on the major surface 20a in a mutually adjoining relationship. The respective lead wire fixing portions 21 are connected to the current supply wiring lines 29 on the major surface 20a of the circuit substrate 20.

Escape portions 25 are provided at the side of the major surface 20a of the circuit substrate 20 along the lead wire fixing portions 21. Three escape portions 25 are provided in a corresponding relationship with the three lead wire fixing portions 21.

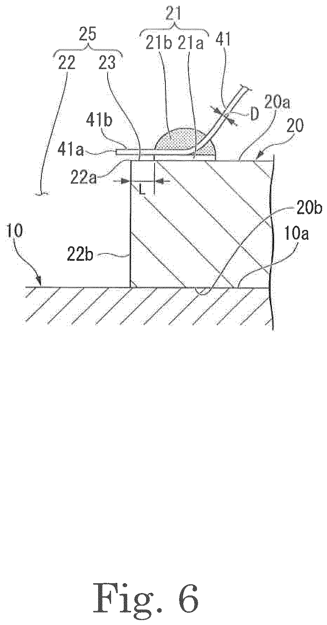

Fig. 6 is an enlarged sectional view of the circuit substrate 20 including the lead wire fixing portions 21 and the escape portions 25. Furthermore, Fig. 6 is a schematic diagram which partially enlarges the circuit substrate 20 in order to emphasize characterizing parts.

As illustrated in Fig. 6, the lead wire fixing portion 21 preferably includes a land 21a and a solder portion 21b provided on the land 21a. The lead wire 41 is fixed onto the land 21a by the solder portion 21b, thereby securing electrical connection of the lead wire 41 and the land 21a.

The escape portion 25 preferably includes a through-hole 22 and a clearance portion 23. The through-hole 22 extends from the major surface 20a of the circuit substrate 20 to the rear surface 20b thereof. The upper surface 10a of the fixing plate 10 is exposed in the through-hole 22. The through-hole 22 is provided side by side with the lead wire fixing portion 21 along the radial direction of the stator unit 40. Furthermore, the through-hole 22 is positioned at the outer side of the lead wire fixing portion 21 with respect to the center axis of the stator unit 40 (namely, the rotation axis of the motor 100). The clearance portion 23 is a clearance region provided between the through-hole 22 and the lead wire fixing portion 21. Wiring patterns of the circuit substrate 20 are not formed in the clearance portion 23.

In the present embodiment, the lead wire 41 extends outward from the side of the center axis of the stator unit 40. Thus, the lead wire 41 passes through the lead wire fixing portion 21 and the escape portion 25 in the named order from the side of the stator unit 40.

The escape portion 25 is preferably provided around the lead wire fixing portion 21 at the side distant from the stator unit 40 on the basis of an extension direction of the lead wire 41. In the present embodiment, the lead wire 41 extends outward from the side of the center axis of the stator unit 40. Therefore, it is preferred that the escape portion 25 is provided radially outward of the lead wire fixing portion 21. By doing so, it is possible to dispose a cut end 41a of the lead wire 41 at the upper side of the escape portion 25.

As an alternative example, the lead wire 41 may extend in a tangential direction of an outer peripheral circle of the stator unit 40. In this case, it is preferred that the escape portion 25 and the lead wire fixing portion 21 are disposed side by side along the tangential direction of the outer peripheral circle of the stator unit 40. Furthermore, it is preferred that the escape portion 25 is disposed at the side of the end of the lead wire 41 with respect to the lead wire fixing portion 21. By doing so, it is possible to dispose the cut end 41a of the lead wire 41 at the upper side of the escape portion 25.

The cut end 41a of the lead wire 41 is positioned above the escape portion 25. In the present embodiment, the cut end 41a of the lead wire 41 is positioned above the through-hole 22 of the escape portion 25. Since the escape portion 25 is provided along the lead wire fixing portion 21, it is possible to shorten the length of a post-cut surplus portion 41b of the lead wire 41 protruding from the solder portion 21b.

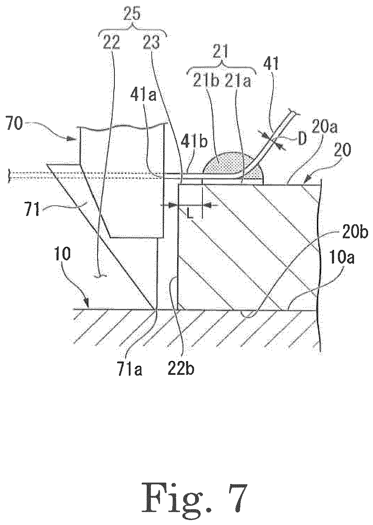

It is preferred that the width W of the escape portion 25 (the width of the through-hole 22) is three times or more as large as the diameter D of the lead wire 41 (see Fig. 7). The width of the escape portion 25 means the planar direction length of the escape portion 25 measured in the direction orthogonal to the extension direction of the lead wire 41. A worker cuts the lead wire 41 by inserting blade edges 71a of a cutting tool 70 into the escape portion 25. By setting the width of the escape portion 25 to become three times or more as large as the diameter D of the lead wire 41, it is possible to insert the blade edges 71a of the cutting tool 70 into the escape portion 25 with the lead wire 41 interposed between a pair of blade portions 71 of the cutting tool 70.

As illustrated in Fig. 5, the escape portion 25 is positioned between the stator unit 40 and the wiring patterns 26 formed on the major surface 20a of the circuit substrate 20. In other words, the circuit substrate 20 preferably includes the wiring patterns 26 formed on the major surface 20a at the outer side of the escape portion 25. Thus, the space on the major surface 20a of the circuit substrate 20 can be effectively used to dispose the wiring patterns 26.

Next, descriptions will be made on one example of a process of fixing the lead wire 41 to the lead wire fixing portion 21.

First, as illustrated in Fig. 3, the stator unit 40 is mounted to the fixing plate 10 fixed to the circuit substrate 20 using the fixing screws 44.

Then, as illustrated in Fig. 4, three lead wires 41 are caused to extend from the stator unit 40 and are disposed so as to pass above the lands 21a and the escape portions 25 (the through-holes 22 and the clearance portions 23).

Next, the lead wires 41 are soldered to the lands 21a. Thus, the lead wires 41 are embedded in the solder portions 21b. It is therefore possible to fix the lead wires 41 and to secure electrical connection of the lead wires 41 and the lands 21a. That is to say, the lands 21a and the solder portions 21b constitute the lead wire fixing portions 21, thereby fixing the lead wires 41. Thus, as illustrated in Fig. 7, the surplus portions 41b of the lead wires 41 extend from the solder portions 21b toward the through-holes 22. The lead wires 41 are disposed so as to pass through the upper side of the through-holes 22.

Next, descriptions will be made on one example of a process of cutting the surplus portions 41b of the lead wires 41 extending from the solder portions 21b.

The cutting tool 70 is used in cutting the lead wires 41. The cutting tool 70 may be, for example, a nipper. The cutting tool 70 preferably includes a pair of blade portions 71. The cutting tool 70 can cut the lead wire 41 by interposing the lead wire 41 between the blade portions 71.

First, the surplus portion 41b of the lead wire 41 extending from the solder portion 21b is gripped with the blade portions 71 of the cutting tool 70. The lead wire 41 is interposed between the blade portions 71 in a state in which the blade edges 71a of the cutting tool 70 are brought into contact with the upper surface 10a of the fixing plate 10 exposed from the lower opening of the through-hole 22. In this state, the cutting of the lead wire 41 is performed. As a result, the cut end 41a of the lead wire 41 is positioned at the upper side of the escape portion 25, more specifically, just above the through-hole 22.

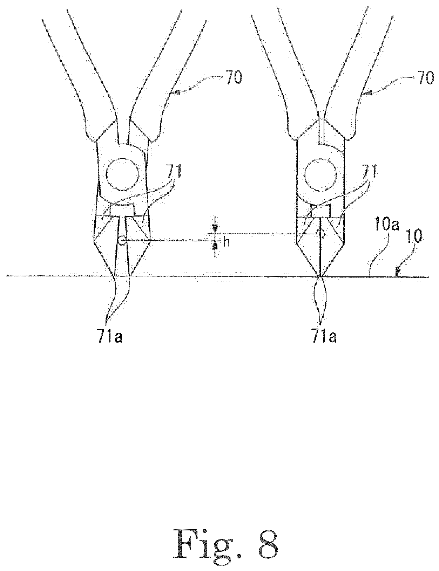

As described above, the cutting process of the present embodiment is performed in a state in which the blade edges 71a of the cutting tool 70 are brought into contact with the upper surface 10a of the fixing plate 10 which is a planar surface. The state of the cutting tool 70 and the lead wire 41 when cutting the lead wire 41 is illustrated in Fig. 8.

In Fig. 8, the state in which the lead wire 41 is positioned between the blade portions 71 with the blade edges 71a brought into contact with the upper surface 10a of the fixing plate 10 will be referred to as a first state. Furthermore, the state available at the moment when the lead wire 41 is cut by closing the blade portions 71 will be referred to as a second state. If the blade portions 71 of the cutting tool 70 are opened and closed, the blade edges 71a describe the locus of a circle. Accordingly, if the blade portions 71 are closed from the first state to the second state in a state in which the blade edges 71a are brought into contact with the planar surface, the lead wire 41 is lifted up by a height of h. Thus, a force by which the lead wire 41 tries to float upward from the land 21a is applied to the lead wire 41.

In the present embodiment, the escape portion 25 preferably includes the clearance portion 23 disposed adjacent to the lead wire fixing portion 21 and positioned between the lead wire fixing portion 21 and the through-hole 22. The clearance portion 23 is provided in a region having a length of L along the extension direction of the lead wire 41. It is preferred that the distance L of the clearance portion 23 is three times or more as large as the diameter D of the lead wire 41. By setting the distance L to become three times or more as large as the diameter D of the lead wire 41, it is possible to make the length of the surplus portion 41b of the cut lead wire 41 three times or more as large as the diameter D of the lead wire 41. Accordingly, as compared with the lift height h of the lead wire 41 lifted up in the cutting process, it is possible to sufficiently reduce the stress generated in the solder portion 21b. This makes it possible to suppress damage of the solder portion 21b and the land 21a.

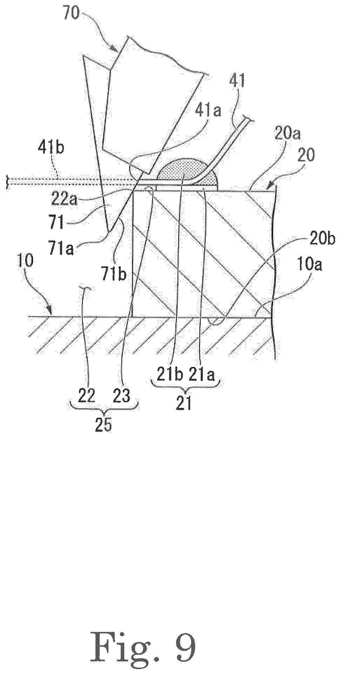

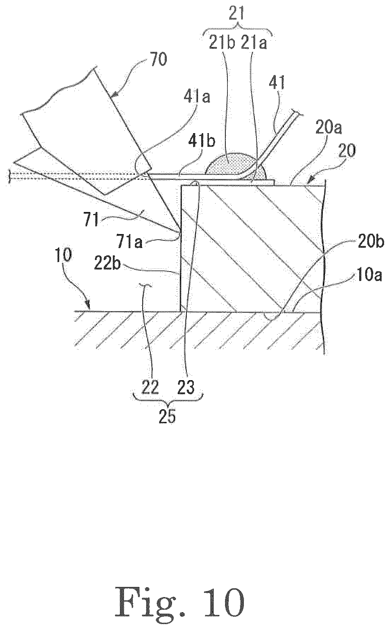

Next, two other examples of the cutting process will be described with reference to Figs. 9 and 10.

In the example illustrated in Fig. 9, the cutting of the lead wire 41 is performed in a state in which the side surfaces 71b of the blade portions 71 of the cutting tool 70 are brought into contact with the edge portion 22a of the through-hole 22. Thus, the cutting tool 70 cuts the lead wire 41 with the cutting tool 70 inclined toward the lead wire fixing portion 21. The cut end 41a of the lead wire 41 is positioned at the upper side of the escape portion 25 and just above the clearance portion 23.

In the example illustrated in Fig. 10, the cutting of the lead wire 41 is performed in a state in which the blade edges 71a of the blade portions 71 of the cutting tool 70 are brought into contact with the sidewall 22b of the through-hole 22. In this case, the cut end 41a of the lead wire 41 is positioned just above the through-hole 22.

As described above, in the motor 100 of the present embodiment, the escape portions 25 are provided along the lead wire fixing portions 21. The escape portion 25 includes the through-hole 22 for allowing the blade edges 71a of the cutting tool 70 to escape. Thus, a worker can cut the lead wire 41 with the blade edges 71a inserted into the escape portion 25. It is therefore possible to prevent the blade edges 71a from making contact with and damaging the patterns of the circuit substrate 20 when cutting the lead wire 41.

Moreover, a worker can cut the lead wire 41 in a state in which the blade portions 71 of the cutting tool 70 are brought into contact with the upper surface 10a of the fixing plate 10 exposed from the through-hole 22, the edge portion 22a of the through-hole 22 or the sidewall 22b of the through-hole 22. This enables the worker to perform the cutting process while stabilizing the blade portions 71 of the cutting tool 70.

Furthermore, in the motor 100 of the present embodiment, the cut end 41a of the lead wire 41 is positioned at the upper side of the escape portion 25. Since the escape portion 25 is disposed along the lead wire fixing portion 21, the surplus portion 41b of the cut lead wire 41 is sufficiently short. Accordingly, it is possible to obtain the motor 100 in which the cut end 41a of the lead wire 41 does not make contact with the components mounted on the circuit substrate 20 or the surrounding components such as a rotor and the like.

The aforementioned structure in which the escape portions 25 are provided along the lead wire fixing portions 21 for fixing the lead wires 41 may be suitably employed in the outer-rotor-type motor described in the present embodiment. In the outer-rotor-type motor 100, the rotor holder 61 provided with the magnet 63 rotates at the radial outer side of the stator unit 40. The cylinder portion 61b of the rotor holder 61 is disposed above the circuit substrate 20 with a small gap left therebetween. Accordingly, in order to avoid contact of the lead wires 41 and the rotor holder 61, it is preferred that the lead wires 41 do not pass under the cylinder portion 61b of the rotor holder 61. That is to say, it is preferred that the lead wires 41 extending from the stator unit 40 are made short and are fixed the circuit substrate 20 at the inner side of the cylinder portion 61b of the rotor holder 61, in which state the processing of the surplus portions 41b of the lead wires 41 is performed. In view of this, it is preferred that the lead wire fixing portions 21 are positioned below the stator unit 40.

According to the motor 100 of the present embodiment, the escape portions 25 are provided to retreat the blade edges 71a of the cutting tool 70 in the thickness direction of the circuit substrate 20. The cutting process is performed in this state. This enables a worker to perform the cutting process of the surplus portions 41b without bringing the cutting tool 70 into contact with the stator unit 40.

In order to bring the cutting tool 70 close to the lead wires 41, it is preferred that the escape portions 25 are disposed outward of the stator unit 40 when seen in a plane view.

In the present embodiment, there are provided three through-holes 22 of the escape portions 25 in a corresponding relationship with the three lead wire fixing portions 21. However, the through-holes 22 of the mutually-adjoining escape portions 25 may be connected to each other. For example, the circuit substrate 20 may include one through-hole extending along the outer side of the three lead wire fixing portions 21. In this case, the three escape portions 25 may share one through-hole.

In the motor 100 of the present embodiment, each of the escapes portions 25 includes the through-hole 22 and the clearance portion 23. However, each of the escapes portions 25 may not include the clearance portion 23. In this case, the land 21a of the lead wire fixing portion 21 and the through-hole 22 adjoin each other. In the case where each of the escapes portions 25 does not include the clearance portion 23, the solder portion 21b is formed to reach the edge portion 22a of the through-hole 22. For that reason, if each of the escapes portions 25 does not include the clearance portion 23, it is difficult to perform the cutting of the lead wire 41 by bringing the side surfaces 71b of the blade portions 71 of the cutting tool 70 into contact with the edge portion 22a of the through-hole 22. In the case where each of the escapes portions 25 does not include the clearance portion 23, it is preferred that the cutting process is performed by bringing the blade edges 71a of the cutting tool 70 into contact with the sidewall 22b of the through-hole 22 or the upper surface 10a of the fixing plate 10 exposed from the through-hole 22.

In the present embodiment, each of the escape portions 25 include the through-hole 22 extending from the major surface 20a of the circuit substrate 20 to the rear surface 20b thereof. The through-hole 22 is a desirable form in that the through-hole 22 can be easily formed in the circuit substrate 20 using a machining tool such as an end mill or the like. However, each of the escape portions 25 may include a hole having a predetermined depth instead of the through-hole 22. Alternatively, each of the escape portions 25 may include a cutout extending from the outer peripheral edge of the circuit substrate 20. These forms will now be described as modification 1 and modification 2.

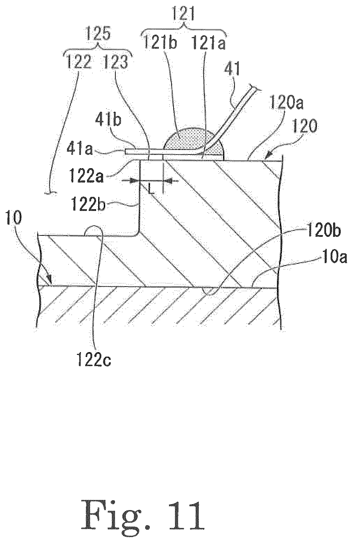

A circuit substrate 120 according to modification 1, which may be employed in the aforementioned motor 100, will be described with reference to Fig. 11. The components identical with those of the aforementioned embodiment will be designated by like reference numerals with the descriptions thereof omitted. Fig. 11 is a sectional view of the circuit substrate 120 and corresponds to Fig. 6 used in describing the aforementioned embodiment.

A lead wire fixing portion 121 for fixing the lead wire 41 is provided in a major surface 120a of the circuit substrate 120. The lead wire fixing portion 121 includes a land 121a and a solder portion 121b provided on the land 121a.

Furthermore, an escape portion 125 is provided in the circuit substrate 120 along the lead wire fixing portion 121 at the side of the major surface 120a. The escape portion 125 preferably includes a hole 122 and a clearance portion 123.

The hole 122 is a hole depressed from the major surface 120a of the circuit substrate 120 in the depth direction (namely, in the direction facing toward a rear surface 120b of the circuit substrate 120). The hole 122 is defined by a bottom surface 122c and a sidewall 122b extending upward from the bottom surface 122c. The clearance portion 123 is a region provided between the hole 122 and the lead wire fixing portion 121.

In the present modification, the lead wire 41 extends outward from the side of the center axis of the stator unit 40. By providing the escape portion 125 at the outer side of the lead wire fixing portion 121 when seen from the center axis of the stator unit 40, the lead wire 41 passes through the lead wire fixing portion 121 and the escape portion 125 in the named order from the side of the stator unit 40. It is preferred that the escape portion 125 is positioned close to the end of the lead wire 41 at the outer side of the lead wire fixing portion 121 in the extension direction of the lead wire 41.

A cut end 41a of the lead wire 41 is positioned at the upper side of the escape portion 125. In the present modification, the cut end 41a is positioned above the escape portion 125.

The cutting process of the lead wire 41 may be performed in the same order as that of the aforementioned cutting process.

First, the lead wire 41 is soldered to the land 121a and is embedded in the solder portion 121b. Thus, the land 121a and the solder portion 121b constitute the lead wire fixing portion 121, thereby fixing the lead wire 41. Then, the lead wire 41 is cut by interposing the lead wire 41 between the blade portions 71 of the cutting tool 70. It is preferred that, when cutting the lead wire 41, the blade edges 71a of the cutting tool 70 are brought into contact with the bottom surface 122c of the hole 122 or the sidewall 122b of the hole 122. Alternatively, the cutting process may be performed by bringing the side surfaces 71b of the cutting tool 70 into contact with the edge portion 122a of the hole 122. Similar to the aforementioned embodiment, the escape portion 125 may not include the clearance portion 123.

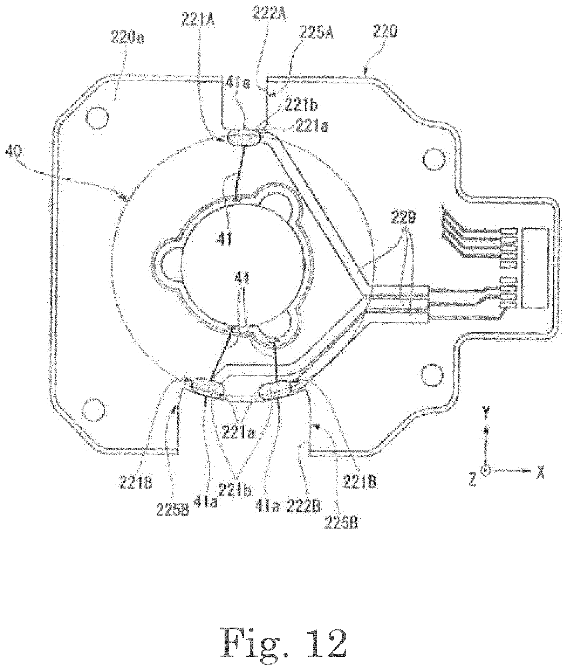

A circuit substrate 220 according to modification 2, which may be employed in the aforementioned motor 100, will be described with reference to Fig. 12. The components identical with those of the aforementioned embodiment will be designated by like reference numerals with the descriptions thereof omitted. Fig. 11 is a plan view of the circuit substrate 220 and corresponds to Fig. 5 used in describing the aforementioned embodiment.

One lead wire fixing portion 221A and two lead wire fixing portions 221B for fixing the lead wires 41 are provided on a major surface 220a of the circuit substrate 220. In Fig. 12, the lead wire fixing portion 211A is disposed at the +Y side of the center axis of the stator unit 40. On the other hand, the two lead wire fixing portions 221B are disposed at the -Y side of the center axis of the stator unit 40. The two lead wire fixing portions 221B are disposed adjacent to each other. Furthermore, the lead wire fixing portion 221A and the lead wire fixing portions 221B are connected to the current supply wiring lines 229 on the major surface 220a of the circuit substrate 220,

Each of the lead wire fixing portion 221A and the lead wire fixing portions 221B preferably includes a land 221a and a solder portion 221b provided on the land 221a.

A escape portion 225A disposed along the lead wire fixing portion 221A and two escape portions 225B disposed long the two lead wire fixing portions 221B are provided in the circuit substrate 220 at the side of the major surface 220a. The escape portion 225A preferably includes a cutout 222A. The escape portions 225B preferably include a cutout 222B.

The cutout 222A extends toward the lead wire fixing portion 221A from the +Y side outer peripheral edge of the circuit substrate 20. On the other hand, the cutout 222B extends toward the two lead wire fixing portions 221B from the -Y side outer peripheral edge of the circuit substrate 220. The cutout 222B has a width large enough to be disposed along the two lead wire fixing portions 221B over the two lead wire fixing portions 221B.

The upper surface 10a of the fixing plate 10 is exposed from the cutout 222A and the cutout 222B. The cutout 222A and the cutout 222B are positioned at the outer side of the lead wire fixing portion 221A or the lead wire fixing portions 221B with respect to the center axis of the stator unit 40 (namely, the rotation axis of the motor 100).

In order to bring the cutting tool 70 close to the lead wire 41, it is preferred that the cutout 222A and the cutout 222B extend from the outer peripheral edge of the circuit substrate 20 to the slightly outer side of the stator unit 40 when seen in a plan view.

The cut end 41a of the lead wire 41 is positioned at the upper side of the escape portion 225A or the escape portions 225B.

The circuit substrate 220 according the modification does not include a clearance portion in each of the escape portion 225A and the escape portions 225B. However, the circuit substrate 220 may include a clearance portion disposed between the cutout 222A and the lead wire fixing portion 221A and clearance portions disposed between the cutout 222B and the lead wire fixing portions 221B.

The motor 100 of the aforementioned embodiment is capable of obtaining the same effects as described above in the case where the circuit substrate 120 of modification 1 or the circuit substrate 220 of modification 2 is employed instead of the circuit substrate 20.

While the embodiment of the present invention and the modifications thereof have been described above, the respective configurations and the combinations thereof described in the embodiment are nothing more than one example. Addition, omission, substitution and other changes of configurations may be made.

for example, in the aforementioned embodiment, the lead wire fixing portion is formed of the land and the solder portion. However, the present invention is not limited thereto. As an alternative example, the lead wire may be pinched and fixed by a screw.

Furthermore, for an example, in the aforementioned embodiment, the cutting process is performed by a worker using the cutting tool. Alternatively, the cutting process may be performed using an automatic cutting device.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope of the present invention. The scope of the present invention, therefore, is to be determined solely by the following claims.

## Claims

1. A motor (100), comprising:
a fixing plate (10);
a circuit substrate (20, 120, 220) mounted on an upper surface (10a) of the fixing plate (10);
a stator unit (40) mounted at a side of the upper surface (10a) of the fixing plate (10) and wound with a lead wire (41);
a rotary unit (60) arranged to relatively rotate with respect to the stator unit (40); and
a lead wire fixing portion (21, 121, 221A, 221B) provided on a major surface (20a, 120a, 220a) of the circuit substrate (20, 120, 220) and arranged to fix the lead wire (41) extending from the stator unit (40),
**characterized in that**
an escape portion (25, 125, 225A, 225B) to allow the blade edges (71a) of a cutting tool (70) to retreat in the thickness direction of the circuit substrate (20) is provided along the lead wire fixing portion (21, 121, 221A, 221B) at a side of the major surface (20a, 120a, 220a) of the circuit substrate (20, 120, 220) and at a side distant from the stator unit (40) on the basis of an extension direction of the lead wire (41), the escape portion (125) including a through-hole (22) or a hole (122) having a predetermined depth or a cutout (222A, 222B) extending from an outer peripheral edge of the circuit substrate (220);
the lead wire (41) has a cut end (41a) positioned above the escape portion (25, 125, 225A, 225B); and
the lead wire (41) can be cut in a state in which the tip of the cutting tool (70) is retreated into the escape portion (125).

2. The motor (100) of claim 1, wherein the circuit substrate (20, 120, 220) has a rear surface (20b, 120b) opposite to the major surface (20a, 120a, 220a), the rear surface (20b, 120b) being in close contact with and fixed to the fixing plate (10).

3. The motor (100) of claim 2, wherein the circuit substrate (20, 120, 220) is a single-side mounting type circuit substrate (20, 120, 220) having a mounting region only on the major surface (20a, 120a, 220a), and the lead wire fixing portion (21, 121, 221A, 221B) is positioned below the stator unit (40).

4. The motor (100) of any one of claims 1 to 3, wherein the escape portion (125) includes the hole (122) and a clearance portion (123), the hole (122) is depressed in a depth direction from the major surface (120a) of the circuit substrate (120), and the clearance portion (123) is a region provided between the hole (122) and the lead wire fixing portion (121).

5. The motor (100) of any one of claims 1 to 3, wherein the escape portion (25) includes the through-hole (22) and a clearance portion (23), and the clearance portion (23) is a clearance region provided between the through-hole (22) and the lead wire fixing portion (21).

6. The motor (100) of any one of claims 1 to 3, wherein the escape portion (225A, 225B) includes the cutout (222A, 222B) extending from the outer peripheral edge of the circuit substrate (220) toward the lead wire fixing portion (221A, 221B) and a clearance portion, and the clearance portion is disposed between the cutout (222A, 222B) and the lead wire fixing portion (221A, 221B).

7. The motor (100) of any one of claims 1 to 6, wherein the lead wire fixing portion includes a plurality of lead wire fixing portions (221A, 221B) provided around the stator unit (40) on the major surface (220a) of the circuit substrate (20, 120, 220), and the escape portion (225A, 225B) is provided along the plurality of lead wire fixing portions (221A, 221B) on the major surface (220a) of the circuit substrate (220).

8. The motor (100) of claim 7, wherein the escape portion includes a plurality of escape portions (225A, 225B) which is provided along the respective lead wire fixing portions (221A, 221B).

9. The motor (100) of any one of claims 1 to 8, wherein the escape portion (25, 125, 225A, 225B) has a size which is three times or more as large as the diameter of the lead wire (41) in a direction orthogonal to the extension direction of the lead wire (41).

10. The motor (100) of any one of claims 1 to 9, wherein the escape portion (25, 125, 225A, 225B) is positioned between the stator unit (40) and a wiring pattern (26) formed on the major surface (20a, 120a, 220a) of the circuit substrate (20, 120, 220).

11. The motor (100) of any one of claims 1 to 7, wherein the motor (100) is an outer-rotor-type motor.

12. The motor (100) of any one of claims 1 to 8, wherein the lead wire fixing portion (21, 121, 221A, 221B) includes a land (21a, 121a, 221a) provided on the major surface (20a, 120a, 220a) of the circuit substrate (20, 120, 220) and a solder portion (21b, 121b, 221b) provided on the land (21a, 121a, 221a), and the lead wire (41) is embedded in the solder portion (21b, 121b, 221b).

## Patentansprüche

1. Ein Motor (100), der folgende Merkmale aufweist:
eine Fixierplatte (10);
ein Schaltungssubstrat (20, 120, 220), das an einer oberen Oberfläche (10a) der Fixierplatte (10) befestigt ist;
eine Statoreinheit (40), die an einer Seite der oberen Oberfläche (10a) der Fixierplatte (10) befestigt ist und mit einem Anschlussdraht (41) umwickelt ist;
eine Dreheinheit (60), die angeordnet ist, um sich bezüglich der Statoreinheit (40) relativ zu drehen; und
einen Anschlussdraht-Fixierabschnitt (21, 121, 221A, 221B), der an einer Hauptoberfläche (20a, 120a, 220a) des Schaltungssubstrats (20, 120, 220) vorgesehen ist und angeordnet ist, um den Anschlussdraht (41), der sich von der Statoreinheit (40) erstreckt, zu fixieren,
**dadurch gekennzeichnet, dass**
ein Austrittsabschnitt (25, 125, 225A, 225B) zum Ermöglichen, dass die Klingenkanten (71a) eines Schneidwerkzeugs (70) sich in der Dickenrichtung des Schaltungssubstrats (20) zurückziehen, entlang des Anschlussdraht-Fixierabschnitts (21, 121, 221A, 221B) an einer Seite der Hauptoberfläche (20a, 120a, 220a) des Schaltungssubstrats (20, 120, 220) und an einer Seite, die auf der Basis einer Erstreckungsrichtung des Anschlussdrahts (41) von der Statoreinheit (40) entfernt ist, vorgesehen ist, wobei der Austrittsabschnitt (125) ein Durchgangsloch (22) oder ein Loch (122) mit einer vorbestimmten Tiefe oder einen Ausschnitt (222A, 222B) umfasst, der sich von einer Außenumfangskante des Schaltungssubstrats (220) erstreckt;
der Anschlussdraht (41) ein abgeschnittenes Ende (41a) aufweist, das oberhalb des Austrittsabschnitts (25, 125, 225A, 225B) positioniert ist; und
der Anschlussdraht (41) in einem Zustand abgeschnitten werden kann, bei dem die Spitze des Schneidwerkzeugs (70) in den Austrittsabschnitt (125) zurückgezogen ist.

2. Der Motor (100) gemäß Anspruch 1, bei dem das Schaltungssubstrat (20, 120, 220) eine rückwärtige Oberfläche (20b, 120b) aufweist, die der Hauptoberfläche (20a, 120a, 220a) gegenüberliegt, wobei die rückwärtige Oberfläche (20b, 120b) in engem Kontakt mit der Fixierplatte (10) ist und an derselben fixiert ist.

3. Der Motor (100) gemäß Anspruch 2, bei dem das Schaltungssubstrat (20, 120, 220) ein Schaltungssubstrat (20, 120, 220) vom Einseitige-Befestigung-Typ ist, das lediglich an der Hauptoberfläche (20a, 120a, 220a) eine Befestigungsregion aufweist, und der Anschlussdraht-Fixierabschnitt (21, 121, 221A, 221B) unterhalb der Statoreinheit (40) positioniert ist.

4. Der Motor (100) gemäß einem der Ansprüche 1 bis 3, bei dem der Austrittsabschnitt (125) das Loch (122) und einen Zwischenraumabschnitt (123) umfasst, das Loch (122) in einer Tiefenrichtung von der Hauptoberfläche (120a) des Schaltungssubstrats (120) aus vertieft ist und der Zwischenraumabschnitt (123) eine Region ist, die zwischen dem Loch (122) und dem Anschlussdraht-Fixierabschnitt (121) vorgesehen ist.

5. Der Motor (100) gemäß einem der Ansprüche 1 bis 3, bei dem der Austrittsabschnitt (25) das Durchgangsloch (22) und einen Zwischenraumabschnitt (23) umfasst und der Zwischenraumabschnitt (23) eine Zwischenraumregion ist, die zwischen dem Durchgangsloch (22) und dem Anschlussdraht-Fixierabschnitt (21) vorgesehen ist.

6. Der Motor (100) gemäß einem der Ansprüche 1 bis 3, bei dem der Austrittsabschnitt (225A, 225B) den Ausschnitt (222A, 222B), der sich von der Außenumfangskante des Schaltungssubstrats (220) zu dem Anschlussdraht-Fixierabschnitt (221A, 221B) hin erstreckt, und einen Zwischenraumabschnitt umfasst und der Zwischenraumabschnitt zwischen dem Ausschnitt (222A, 222B) und dem Anschlussdraht-Fixierabschnitt (221A, 221B) angeordnet ist.

7. Der Motor (100) gemäß einem der Ansprüche 1 bis 6, bei dem der Anschlussdraht-Fixierabschnitt eine Mehrzahl von Anschlussdraht-Fixierabschnitten (221A, 221B) umfasst, die um die Statoreinheit (40) herum an der Hauptoberfläche (220a) des Schaltungssubstrats (20, 120, 220) vorgesehen sind, und der Austrittsabschnitt (225A, 225B) entlang der Mehrzahl von Anschlussdraht-Fixierabschnitten (221A, 221B) an der Hauptoberfläche (220a) des Schaltungssubstrats (220) vorgesehen ist.

8. Der Motor (100) gemäß Anspruch 7, bei dem der Austrittsabschnitt eine Mehrzahl von Austrittsabschnitten (225A, 225B) umfasst, die entlang der jeweiligen Anschlussdraht-Fixierabschnitte (221A, 221B) vorgesehen sind.

9. Der Motor (100) gemäß einem der Ansprüche 1 bis 8, bei dem der Austrittsabschnitt (25, 125, 225A, 225B) eine Größe aufweist, die in einer Richtung, die senkrecht zu der Erstreckungsrichtung des Anschlussdrahts (41) ist, das Dreifache oder mehr des Durchmessers des Anschlussdrahts (41) beträgt.

10. Der Motor (100) gemäß einem der Ansprüche 1 bis 9, bei dem der Austrittsabschnitt (25, 125, 225A, 225B) zwischen der Statoreinheit (40) und einem Verdrahtungsmuster (26) positioniert ist, das an der Hauptoberfläche (20a, 120a, 220a) des Schaltungssubstrats (20, 120, 220) gebildet ist.

11. Der Motor (100) gemäß einem der Ansprüche 1 bis 7, wobei der Motor (100) ein Motor vom Außenrotor-Typ ist.

12. Der Motor (100) gemäß einem der Ansprüche 1 bis 8, bei dem der Anschlussdraht-Fixierabschnitt (21, 121, 221A, 221B) einen Anschlussbereich (21a, 121a, 221a), der an der Hauptoberfläche (20a, 120a, 220a) des Schaltungssubstrats (20, 120, 220) vorgesehen ist, und einen Lötmittelabschnitt (21b, 121b, 221b) umfasst, der an dem Anschlussbereich (21a, 121a, 221a) vorgesehen ist, und der Anschlussdraht (41) in den Lötmittelabschnitt (21b, 121b, 221b) eingebettet ist.

## Revendications

1. Moteur (100), comprenant:
une plaque de fixation (10);
un substrat de circuit (20, 120, 220) monté sur une surface supérieure (10a) de la plaque de fixation (10);
une unité de stator (40) montée d'un côté de la surface supérieure (10a) de la plaque de fixation (10) et enroulée d'un fil conducteur (41);
une unité rotative (60) disposée de manière à tourner de manière relative par rapport à l'unité de stator (40); et
une partie de fixation de fil conducteur (21, 121, 221A, 221B) prévue sur une surface principale (20a, 120a, 220a) du substrat de circuit (20, 120, 220) et disposée de manière à fixer le fil conducteur (41) s'étendant à partir de l'unité de stator (40),
**caractérisé par le fait que**
une partie d'échappement (25, 125, 225A, 225B) destinée à permettre que les bords de lame (71a) d'un outil de coupe (70) se rétracte dans la direction de l'épaisseur du substrat de circuit (20) est prévue le long de la partie de fixation de fil conducteur (21, 121, 221A, 221B) d'un côté de la surface principale (20a, 120a, 220a) du substrat de circuit (20, 120, 220) et d'un côté éloigné de l'unité de stator (40) sur base d'une direction d'extension du fil conducteur (41), la partie d'échappement (125) comportant un trou traversant (22) ou un trou (122) présentant une profondeur prédéterminée ou une découpe (222A, 222B) s'étendant à partir d'un bord périphérique extérieur du substrat de circuit (220);
le fil conducteur (41) présente une extrémité coupée (41a) positionnée au-dessus de la partie d'échappement (25, 125, 225A, 225B); et
le fil conducteur (41) peut être coupé dans un état où la pointe de l'outil de coupe (70) est rétractée dans la partie d'échappement (125).

2. Moteur (100) selon la revendication 1, dans lequel le substrat de circuit (20, 120, 220) présente une surface arrière (20b, 120b) opposée à la surface principale (20a, 120a, 220a), la surface arrière (20b, 120b) étant en contact étroit avec et fixée à la plaque de fixation (10).

3. Moteur (100) selon la revendication 2, dans lequel le substrat de circuit (20, 120, 220) est un substrat de circuit (20, 120, 220) de type à montage d'un seul côté présentant une région de montage uniquement sur la surface principale (20a, 120a, 220a), et la partie de fixation de fil conducteur (21, 121, 221A, 221B) est positionnée au-dessous de l'unité de stator (40).

4. Moteur (100) selon l'une quelconque des revendications 1 à 3, dans lequel la partie d'échappement (125) comporte le trou (122) et une partie de dégagement (123), le trou (122) est enfoncé dans une direction de profondeur à partir du la surface principale (120a) du substrat de circuit (120), et la partie de dégagement (123) est une région prévue entre le trou (122) et la partie de fixation de fil conducteur (121).

5. Moteur (100) selon l'une quelconque des revendications 1 à 3, dans lequel la partie d'échappement (25) comporte le trou traversant (22) et une partie de dégagement (23), et la partie de dégagement (23) est une région de dégagement prévue entre le trou traversant (22) et la partie de fixation du fil conducteur (21).

6. Moteur (100) selon l'une quelconque des revendications 1 à 3, dans lequel la partie d'échappement (225A, 225B) comporte la découpe (222A, 222B) s'étendant du bord périphérique extérieur du substrat de circuit (220) vers la partie de fixation de fil conducteur (221A, 221B) et une partie de dégagement, et la partie de dégagement est disposée entre la découpe (222A, 222B) et la partie de fixation de fil conducteur (221A, 221B).

7. Moteur (100) selon l'une quelconque des revendications 1 à 6, dans lequel la partie de fixation de fil conducteur comporte une pluralité de parties de fixation de fil conducteur (221A, 221B) prévues autour de l'unité de stator (40) sur la surface principale (220a) du substrat de circuit (20, 120, 220), et la partie d'échappement (225A, 225B) est prévue le long de la pluralité de parties de fixation de fil conducteur (221A, 221B) sur la surface principale (220a) du substrat de circuit (220).

8. Moteur (100) selon la revendication 7, dans lequel la partie d'échappement comporte une pluralité de parties d'échappement (225A, 225B) qui sont prévues le long des parties de fixation de fil conducteur respectives (221A, 221B).

9. Moteur (100) selon l'une quelconque des revendications 1 à 8, dans lequel la partie d'échappement (25, 125, 225A, 225B) présente une grandeur qui est trois fois ou plus supérieure au diamètre du fil conducteur (41) dans une direction orthogonale à la direction d'extension du fil conducteur (41).

10. Moteur (100) selon l'une quelconque des revendications 1 à 9, dans lequel la partie d'échappement (25, 125, 225A, 225B) est positionnée entre l'unité de stator (40) et un motif de câblage (26) formé sur la surface principale (20a, 120a, 220a) du substrat de circuit (20, 120, 220).

11. Moteur (100) selon l'une quelconque des revendications 1 à 7, dans lequel le moteur (100) est un moteur de type à rotor extérieur.

12. Moteur (100) selon l'une quelconque des revendications 1 à 8, dans lequel la partie de fixation de fil conducteur (21, 121, 221A, 221B) comporte un palier (21a, 121a, 221a) prévu sur la surface principale (20a, 120a, 220a) du substrat de circuit (20, 120, 220) et une partie de soudure (21b, 121b, 221b) prévue sur le palier (21a, 121a, 221a), et le fil conducteur (41) est noyé dans la partie de soudure (21b, 121b, 221b).
